(19) Europäisches Patentamt European Patent Office Office européen des brevets

(11) **EP 2 168 198 B1**

(12) **FASCICULE DE BREVET EUROPEEN**

(45) Date de publication et mention
de la délivrance du brevet:
**15.10.2014 Bulletin 2014/42**

(21) Numéro de dépôt: **08805896.1**

(22) Date de dépôt: **30.05.2008**

(51) Int Cl.:
*H01M 8/12* (2006.01)    *C25B 13/04* (2006.01)
*B01D 53/32* (2006.01)    *B01D 69/02* (2006.01)
*C25B 1/12* (2006.01)    *B01D 53/22* (2006.01)

(86) Numéro de dépôt international:
**PCT/FR2008/050953**

(87) Numéro de publication internationale:
**WO 2008/152317 (18.12.2008 Gazette 2008/51)**

(54) **Procédé d'optimisation de la conductivité assurée par le déplacement des protons H+ et/ou des ions OH- d'une membrane conductrice**

Verfahren zur Optimierung der durch Verschiebung von H+-protonen und/oder OH--ionen in einer leitfähigen Membran herbeigeführten Leitfähigkeit

Method for optimising the conductivity provided by the displacement of H+ protons and/or OH- ions in a conductive membrane

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **01.06.2007 FR 0755418**

(43) Date de publication de la demande:
**31.03.2010 Bulletin 2010/13**

(73) Titulaires:
• **AREVA**
**75009 Paris (FR)**
• **Societe des Ceramiques Techniques**
**65460 Bazet (FR)**
• **ARMINES**
**75272 Paris Cedex 06 (FR)**
• **Centre National de la Recherche Scientifique (CNRS)**
**75794 Paris Cedex 16 (FR)**

(72) Inventeurs:
• **SALA, Béatrice**
**F-34980 St Gely Du Fesc (FR)**
• **LACROIX, Olivier**
**F-34000 Montpellier (FR)**
• **WILLEMIN, Stéphanie**
**F-34090 Montpellier (FR)**
• **RAHMOUNI, Kamal**
**F-75012 Paris (FR)**
• **TAKENOUTI, Hisasi**
**F-91340 Ollainville (FR)**
• **VAN DER LEE, Arie**
**F-34170 Castelnau Le Lez (FR)**
• **COLOMBAN, Philippe**
**F-94260 Fresnes (FR)**
• **GOEURIOT, Patrice**
**F-43120 Monistrol Sur Loire (FR)**
• **BENJERIOU-SEDJERARI, Baroudi**
**F-42100 St Etienne (FR)**

(74) Mandataire: **Lebkiri, Alexandre**
**Cabinet Camus Lebkiri**
**87 Rue Taitbout**
**75009 Paris (FR)**

(56) Documents cités:
**EP-A- 0 962 423        EP-A- 0 964 466**
**EP-A1- 1 320 140        US-A- 5 733 435**
**US-A1- 2006 008 692**

• **KOBAYASHI T ET AL: "Reduction of nitrogen oxide by a steam electrolysis cell using a proton conducting electrolyte" SOLID STATE IONICS, NORTH HOLLAND PUB. COMPANY. AMSTERDAM, NL, vol. 86-88, juillet 1996 (1996-07), pages 603-607, XP004070101 ISSN: 0167-2738**

EP 2 168 198 B1

- IWAHARA H ET AL: "Proton conduction in sintered oxides and its application to steam electrolysis for hydrogen production" PROCEEDINGS OF THE THIRD INTERNATIONAL MEETING ON SOLID ELECTROLYTES - SOLID STATE IONICS AND GALVANIC CELLS 15-19 SEPT. 1980 TOKYO, JAPAN, vol. 3-4, 1981, pages 359-363, XP002465958 Solid State Ionics Netherlands ISSN: 0167-2738
- IWAHARA H ET AL: "High temperature type proton conductor based on SrCeO3 and its application to solid electrolyte fuel cells" PROCEEDINGS OF THE 4TH INTERNATIONAL CONFERENCE ON SOLID STATE IONICS 4-8 JULY 1983 GRENOBLE, FRANCE, vol. 9-10, 1983, pages 1021-1025, XP002465959 Solid State Ionics Netherlands ISSN: 0167-2738
- UCHIDA H ET AL: "Relation between proton and hole conduction in SrCeO3-based solid electrolytes under water-containing atmospheres at high temperatures" Solid State Ionics Netherlands, vol. 11, no. 2, 1983, pages 117-124, XP002465960 ISSN: 0167-2738

## Description

La présente invention concerne un procédé d'optimisation de la conductivité assurée par le déplacement des protons $H^+$ et/ou des ions $OH^-$ d'une membrane conductrice.

Les membranes céramiques conductrices ioniques font aujourd'hui l'objet de nombreuses recherches pour augmenter leurs performances ; elles trouvent des applications particulièrement intéressantes dans les domaines :

- de l'électrolyse de l'eau à haute température pour la production d'hydrogène,
- de l'obtention de piles à combustible hydrogène,
- de la séparation et purification de l'hydrogène et de ses isotopes par rapport à des produits carbonés.

L'hydrogène ($H_2$) apparaît aujourd'hui comme un vecteur énergétique très intéressant, qui est appelé à prendre de plus en plus d'importance pour traiter entre autre les produits pétroliers, et qui pourrait, à terme, se substituer avantageusement au pétrole et aux énergies fossiles, dont les réserves vont fortement décroître dans les décennies à venir. Dans cette perspective, il est toutefois nécessaire de développer des procédés efficaces de préparation d'hydrogène.

Il a certes été décrit de nombreux procédés de synthèse d'hydrogène, à partir de différentes sources, mais nombre de ces procédés s'avèrent en fait mal adaptés à une production industrielle massive d'hydrogène.

Dans ce cadre, on peut par exemple citer la synthèse d'hydrogène à partir d'hydrocarbures. Un des problèmes majeurs de cette voie de synthèse est qu'elle engendre, à titre de sous-produit, des quantités importantes de gaz à effet de serre de type $CO_2$. En effet, actuellement pour produire 1 tonne d'hydrogène, 8 à 10 tonnes de $CO_2$ sont libérées.

Il peut également être fait mention de procédés de conversions thermochimiques de l'eau en hydrogène, qui, pour la plupart, ne sont pas transposables à l'échelle industrielle. En particulier, la décomposition thermique directe de l'eau, qui nécessiterait des températures irréalistes de l'ordre de 3000 à 4000°K qui peuvent cependant être abaissée en présence de catalyseurs.

D'autres modes de décomposition thermochimique de l'eau à partir de catalyseurs soufrés, iodurés ou bromés nécessitent des températures plus faibles 850°C mais induisent des problèmes de corrosion sévères ce qui empêche leur industrialisation.

Une voie plus prometteuse pour la production industrielle d'hydrogène est la technique dite d'électralyse de la vapeur d'eau à haute température (dite EHT).

A l'heure actuelle, deux modes de réalisation sont présentés:

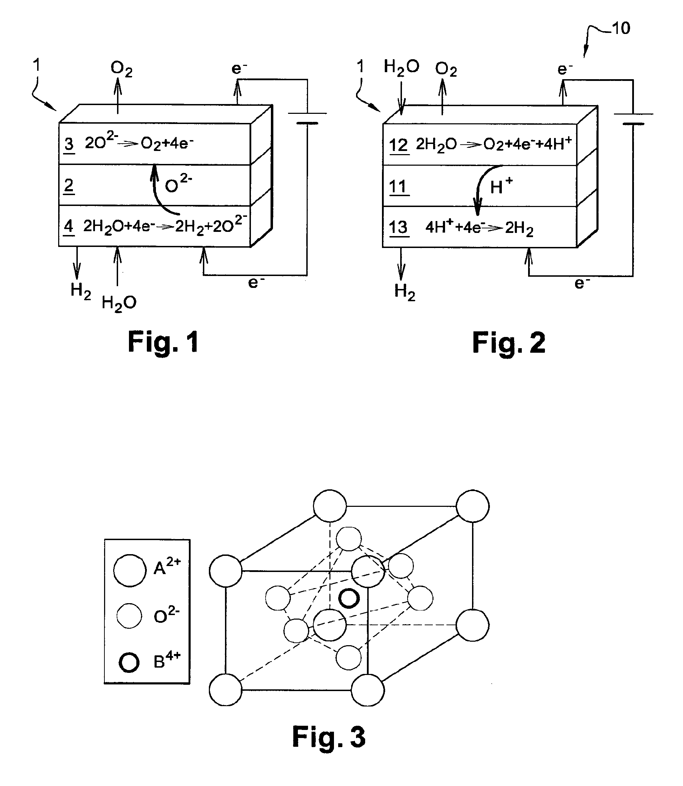

- l'électrolyse utilisant un électrolyte capable de conduire les ions $O^{2-}$ et fonctionnant à des températures généralement comprises entre 750°C et 1000°C illustrée sur la figure 1,
- l'électrolyse utilisant un électrolyte capable de conduire les protons et fonctionnant à des températures généralement comprises entre 400°C et 800°C illustrée sur la figure 2. Un électrolyte donné peut-être un conducteur protonique ou ionique $O^{2-}$ en fonction de la température.

La figure 1 représente de manière schématique un électrolyseur 1 comportant une membrane céramique 2 conductrice d'ions $O^{2-}$ assurant la fonction d'électrolyte séparant une anode 3 et une cathode 4. On applique une différence de potentiel entre l'anode 3 et la cathode 4. La vapeur d'eau $H_2O$ est réduite du coté de la cathode 4. La vapeur rentre à la cathode 4 et est dissociée pour former de l'hydrogène $H_2$ à la surface de la cathode 4 et des ions $O^{2-}$. Les ions $O^{2-}$ migrent à travers l'électrolyte 2 pour former de l'oxygène $O_2$ à la surface de l'anode 3, des électrons $e^-$ étant libérés. On récupère en sortie de l'électrolyseur 1 d'un coté l'oxygène et de l'autre de l'hydrogène mélangé avec le reste de la vapeur d'eau.

Le document EP0962423 décrit un dispositif comportant une membrane conductrice à conductivité $O^{2-}$ fonctionnant sur une gamme de température 500°C-1200°C dans laquelle on peut insérer sous pression de la vapeur d'eau via la cathode du dispositif.

La figure 2 représente de manière schématique un électrolyseur 10 comportant une membrane céramique 11 conductrice de proton assurant la fonction d'électrolyte séparant une anode 12 et une cathode 13.

On applique une différence de potentiel entre l'anode 12 et la cathode 13. La vapeur d'eau $H_2O$ est électrolysée le long de l'électrolyte 11 du coté de l'anode 12. La vapeur rentre à l'anode 12 et est oxydée pour former de l'oxygène $O_2$ et des ions $H^+$, cette réaction libérant des électrons $e^-$. Les ions $H^+$ traversent l'électrolyte 11 pour former de l'hydrogéne $H_2$ à la surface de la cathode 13. On récupère donc en sortie de l'électrolyseur 10 d'un coté de l'hydrogène et de l'autre de l'oxygène mélangé avec le reste de la vapeur d'eau. Le document "Reduction of nitrogen oxide by a steam electrolysis cell using a proton conducting electrolyte" (T. Kobayashi et al., Solid State Ionics, 86-88 (1996), p.603-607) décrit un dispositif comportant une membrane conductrice à conductivité $H^+$ fonctionnant sur une gamme de température 380°C-590°C.

L'électrolyse à conduction protonique telle que schématisée en figure 2 présente deux avantages incontestables par rapport à l'électrolyse à conduction $O^{2-}$:

- une température de fonctionnement plus basse permettant l'utilisation de matériaux de structure commerciaux sans problème de corrosion.
- une production d'hydrogène de haute pureté, puisqu'on obtient l'hydrogène à la cathode sans avoir besoin de le séparer de l'eau contrairement à l'électrolyse à conduction $O^{2-}$

Ces deux avantages permettent de réduire le coût de production de l'hydrogène, grâce à une réduction du coût de l'installation.

Toutefois, ce type d'électrolyse est encore en cours d'étude au niveau laboratoire.

L'objectif des études mises en oeuvre est d'obtenir le maximum de rendement pour la production d'hydrogène. Pour ce faire, il faut que la majorité du courant utilisé intervienne dans le processus faradique, c'est-à-dire soit utilisé pour la réduction de l'eau et en conséquence la production d' l'hydrogéne. C'est ainsi que la tension utilisée pour la polarisation doit être affectée au minimum par

- les surtensions aux électrodes
- les résistances de contact au niveau des interfaces électrodes/électrolytes,
- la chute ohmique au sein des matériaux et en particulier à l'intérieur de l'électrolyte.

Dans ce contexte, la présente invention vise à fournir un procédé d'optimisation de la conductivité d'une membrane conductrice ionique permettant de limiter la chute ohmique au sein de ladite membrane qui peut être utilisée en particulier en tant qu'électrolyte pour l'électrolyse de l'eau à haute température pour la production d'hydrogène mais également dans le cadre de l'obtention de piles à combustible à hydrogène ou de dispositifs de purification de l'hydrogène.

A cette fin, l'invention propose un procédé d'optimisation de la conductivité assurée par le déplacement des protons H$^+$ et/ou des ions OH$^-$ d'une membrane conductrice réalisée dans un matériau permettant l'insertion de vapeur d'eau dans ladite membrane, ledit procédé comportant une étape d'insertion sous pression d'un courant gazeux contenant de la vapeur d'eau dans ladite membrane de sorte qu'on force ladite vapeur d'eau à rentrer dans ladite membrane sous une certaine pression partielle de manière à obtenir la conductivité recherchée à une température donnée, ladite pression partielle étant supérieures ou égale à 10 bars et inférieure ou égale à 100 bars, une baisse de la température de fonctionnement étant compensée par une augmentation de ladite pression partielle pour obtenir la même conductivité recherchée.

On entend par matériau permettant l'insertion de vapeur d'eau dans ladite membrane, un matériau apte à assurer l'adsorption et/ou l'absorption de la vapeur d'eau dans la membrane.

On entend par courant gazeux contenant de la vapeur d'eau, un milieu comprenant de l'eau sous forme vapeur, éventuellement mélangé avec d'autres gaz. Ainsi, selon les cas, le terme « pression partielle » désignera soit la pression totale du courant gazeux dans le cas où ce dernier est constitué uniquement de vapeur d'eau ou la pression partielle de vapeur d'eau dans le cas où le courant gazeux comprend d'autres gaz que la vapeur d'eau.

Grâce à l'invention, on force la vapeur d'eau sous pression à rentrer dans la membrane et on utilise avantageusement cette pression pour obtenir la conductivité recherchée à une température donnée. Comme nous le verrons dans la suite de la description en référence aux figures, la demanderesse a observé que l'augmentation de la pression partielle de vapeur d'eau entraîne une augmentation de la conductivité ionique de la membrane. Cette corrélation entre l'augmentation de pression partielle et l'augmentation de conductivité permet de travailler avec des matériaux fonctionnant à plus basse température, la baisse de conductivité entraînée par un fonctionnement à plus basse température étant compensée par l'augmentation de la pression partielle de vapeur d'eau.

Le procédé selon l'invention peut également présenter une ou plusieurs des caractéristiques ci-dessous, considérées individuellement ou selon toutes les combinaisons techniquement possibles.

la pression partielle de vapeur d'eau est supérieure ou égale à 10 bars et inférieure ou égale à 100 bars et de préférence supérieure ou égale à 15 bars.

Avantageusement, la température est supérieure à 400°C.

Avantageusement, la conductivité ionique est supérieure ou égale à 10$^{-3}$ S/cm.

Avantageusement, le matériau utilisé dans le cadre de l'invention est imperméable aux gaz O$_2$ et H$_2$.

Avantageusement, le matériau utilisé dans le cadre de l'invention est un matériau ayant un taux de densification supérieur à 88% et de préférence supérieur ou égal à 98%. Il convient de trouver un bon compromis entre le taux de densification qui doit être le plus élevé possible (notamment pour la tenue mécanique des électrolytes et la perméation des gaz) et la capacité du matériau à permettre l'insertion d'eau. L'augmentation de la pression partielle de vapeur d'eau qui force la vapeur d'eau dans la membrane permet de compenser l'augmentation du taux de densification.

Le matériau permettant l'insertion d'eau est un oxyde lacunaire en atomes d'oxygène tel qu'une perovskite lacunaire en oxygène agissant comme conducteur protonique.

Avantageusement, l'oxyde lacunaire en atomes d'oxygène présente des écarts stoechiométriques et/ou est dopé.

En effet, la non-stoechiométrie et/ou le dopage permettent la création de lacunes en atomes d'oxygène. Ainsi, dans le cas de la conduction protonique, l'exposition sous pression d'une perovskite présentant des écarts stoechiométriques et/ou dopée (et donc déficiente en oxygène), à la vapeur d'eau induit l'absorption de molécules d'eau dans la structure. Les molécules d'eau remplissent les lacunes en oxygène et se dissocient en 2 groupes hydroxyles selon la réaction :

$$O_O^x + V_O^{\cdot\cdot} + H_2O \Leftrightarrow 2OH_O^{\cdot}$$

Les matériaux désignés sous le terme perovskite couvrent :

- les perovskites simples qui peuvent être représentées par une structure cubique telle qu'illustrée en figure 3; la formule chimique est $ABO_3$. Les degrés d'oxydation des éléments contenus dans les perovskites varient de +1 à +3 pour A, de +2 à +5 pour B comme le montre le tableau 1 ci-dessous.

**Tableau 1:** Eléments constitutifs d'une structure $ABO_3$ en absence de dopant

| Site Docaédrique A | | Site Octaédrique B | |
|---|---|---|---|
| $Na^+$ | $Ba^{+2}$ | $Fe^{+3}$ | $Zr^{4+}$ |
| $K^+$ | $Pb^{+2}$ | $Co^{+3}$ | $Ti^{+4}$ |
| $Rb^+$ | $Cu^{+2}$ | $Ni^{+3}$ | $Ce^{+4}$ |
| $Ag^+$ | $Mg^{+2}$ | $Ti^{+3}$ | $Th^{+4}$ |
| $Ca^{+2}$ | $Fe^{3+}$ | $V^{+3}$ | $Mn^{+4}$ |
| $Sr^{+2}$ | $La^{+3}$ | $Cr^{+3}$ | $Ta^{+5}$ |
| | $Pr^{+3}$ | $Mn^{+3}$ | $W^{+5}$ |

Il est généralement admis que les degrés d'oxydation sont +2 pour A, +4 pour B et -2 pour O. Une autre forme commune des perovskites est orthorhombique. Cette structure dérive de la structure cubique par des effets de température. On retiendra 3 grandes familles ou l'élément B est tétravalent ;

○ les perovskites de type cérates (où B=Ce) répondant à la formule générale ACeOs ;
○ les perovskites de type zirconates (où B=Zr) répondant à la formule générale $AZrO_3$ ;
○ les perovskites de type titanates (où B= Ti) répondant à la formule générale $ATiO_3$ ;
○ on peut également citer les tantalates et les niobiates.

- Hormis $ABO_3$, on peut trouver d'autres structures de perovskites. On peut citer notamment, des doubles perovskites $A_2BB'O_6$ (avec B ayant un degré d'oxydation +3 et B' un degré d'oxydation +5) et des triples perovskites $A_3BB'_2O_9$ (avec B ayant un degré d'oxydation +2 et B' un degré d'oxydation +5), dont la caractéristique est de contenir au niveau des sites B, des éléments de stoechiométrie différentes. Ces structures présentent des déviations par rapport aux perovskites simples du fait des écarts stoechiométriques. Ainsi, on pourra observer une modification de la géométrie des octaèdres $BO_6$ ou encore voir apparaître la formation de lacunes en oxygène à cause de l'encombrement stérique. Ces modifications structurales pourront influencer la conduction protonique, notamment, si l'on regarde la faculté des ions hydrogènes sous forme $H^+(H_2O)$ et $OH^-$ à pouvoir migrer d'un réseau octaédrique à un autre.

Des perovskites peuvent être dopées soit en site A soit en site B par un élément désigné par D, avantageusement choisi parmi, les lanthanides Ln, ou certains métaux, les éléments alcalins ou alcalino-terreux.

Le dopant D est de préférence l'ytterbium (Yb) à son degré d'oxydation +III. En effet $Yb^{3+}$ a la particularité de présenter un rayon ionique proche de celui de $Zr^{4+}$ L'ytterbium III se substitue de ce fait très efficacement au zirconium IV dans la structure de la perovskite, conduisant ainsi à la formation efficace de lacunes en oxygène.

Des perovskites non stoechiométriques adaptées à la mise en oeuvre de l'invention répondent par exemple à la formule suivante : $A_xByO_3$, x et y étant deux nombres réels positifs et différents de 1

Avantageusement :

A désigne un atome métallique à un état d'oxydation compris entre +I et +III, généralement à un état d'oxydation égal à +II, par exemple $Ca^{2+}$, $Ba^{2+}$, ou $Sr^{2+}$, B désigne un atome métallique à un état d'oxydation compris entre +III à +V, généralement à un état d'oxydation égal à +IV, comme par exemple $Zr^{4+}$, $Ce^{4+}$ ou $Ti^{4+}$

Par exemple, une perovskite adaptée à la mise en oeuvre de l'invention répond à la formule $SrZr_{0,9}Yb_{0,1}O_{2,95}$ ou $BaZr_{0,9}Y_{0,1}O_{2.95}$.

A titre d'exemple, d'autres perovskites bien adaptées dans le cadre de la présente invention, pourraient être citées, de façon non limitative :

- Les perovskites $SrZrO_3$ dopées par une ou plusieurs terres rares, notamment par $Y^{3+}$, $Ho^{3+}$, $Er^{3+}$ et/ou $Yb^{3+}$;
- Les perovskites de type $BaZrO_3$ dopées au moins par une terre rare, notamment par $Yb^{3+}$;
- Les perovskites de type $CaZrO_3$ dopées au moins par une terre rare, notamment par $Yb^{3+}$;
- Les perovskites $SrTiO_3$ dopées par un ou plusieurs des éléments suivants, notamment par $Al^{3+}$, $Nb^{3+}$, $Sc^{3+}$ ;
- Les perovskites de type $BaTiO_3$ dopées un ou plusieurs des éléments suivants, notamment par $Al^{3+}$;
- Les perovskites de type $CaTiO_3$ dopées un ou plusieurs des éléments suivants, notamment par $Al^{3+}$;
- Les perovskites mixtes $Sr_{1-x} Ba_xZrO_3$ dopées par une ou plusieurs terres rares, notamment par $Yb^{3+}$ ;
- Les perovskites mixtes de type $Sr_{1-x}Ca_x ZrO_3$ dopées au moins par une terre rare, notamment par $Yb^{3+}$ ;
- Les perovskites mixtes de type $Ca_{1-x}Ba_xZrO_3$ dopées au moins par une terre rare, notamment par $Yb^{3+}$ ;
- Les perovskites mixtes de type $Sr_{1-x}Ba_xTiO_3$ dopées notamment par $Al^{3+}$;
- Les perovskites mixtes de type $Ca_{1-x} Sr_xTiO_3$ dopées notamment par $Al^{3+}$;
- Les perovskites mixtes de type $Ca_{1-x} Ba_xTiO_3$ dopées notamment par $Al^{3+}$.

On notera que d'autres matériaux que les perovskites non stoechiométriques et/ou dopés peuvent être utilisés en tant que matériau favorisant l'insertion d'eau et sa dissociation sous forme de protons et/ou d'hydroxydes; notamment des structures cristallographiques telles que les structures fluorine, les structures pyrochlore $A_2B_2X_7$, les structure apatite $Me_{10}(XO_4)_6Y_2$, les structures oxyapatite $Me_{10}(XO_4)_6O_2$ et les structures hydroxyapatite $Me_{10}(XO_4)_6(OH)_2$.

Ainsi, la structure pyrochlore formée d'un réseau tridimensionnel d'octaèdres $(B_2X_6)$ comporte des tunnels, des cages et des sites vacants en oxygène permettant la migration des ions issus de l'eau.

De même la structure hexagonale compacte formée de tétraèdres $(XO_4)$ des apatites induit la formation de tunnels qui permettent la mobilité des ions et des substitutions aisées. L'eau pénètre dans ces tunnels, et les protons peuvent y circuler. On notera que les apatites peuvent être des silicates.

D'autres familles de silicates sont également à prendre en considération, sans que cela constitue une partie de l'invention:

- les aluminosilicates soit sous forme de phyllosilicates (clays) ou de zéolites. L'insertion d'éléments comme $Al^{3+}$ dans le réseau de la silice $Si^{4+}$, fait que ce réseau est chargé négativement. Les cations s'insèrent dans ce réseau pour compenser la charge négative. Parmi ces cations, le proton est un très bon candidat. Les conductivités varient avec la teneur en eau et l'espacement entre les feuillets. Des ions comme l'ion ammonium $NH_4^+$ stabilisent cette teneur en eau à haute température. D'ailleurs, les aluminosilicates gardent une forte teneur en eau à température élevée (300° et 400 °C).
- les silicates greffés avec des oxoacides peuvent aussi donner de bons résultats.
- Les silicates greffés avec des phosphates donnent aussi des résultats intéressants même en milieu presque anhydre (20% $H_2O$).

L'ensemble des composés utilisés comme conducteurs ioniques à haute température ou température intermédiaire sont de par leur structure en tunnel ou en feuillet et/ou par la présence de lacunes capables d'insérer de l'eau dont la taille moléculaire est faible.

La présente invention est également en relation avec un premier dispositif d'électrolyse de production d'hydrogène pour la mise en oeuvre du procédé selon l'invention caractérisé en ce qu'il comporte :

- un électrolyte sous forme de membrane conductrice ionique réalisée dans ledit matériau permettant l'insertion de vapeur d'eau dans ladite membrane,
- une anode,
- une cathode,
- un générateur permettant d'appliquer une différence de potentiel entre ladite anode et ladite cathode,

- des moyens pour l'insertion sous pression de vapeur d'eau dans ledit électrolyte via ladite anode.

La présente invention est également en relation avec un second dispositif d'électrolyse de production d'hydrogène pour la mise en oeuvre du procédé selon l'invention caractérisé en ce qu'il comporte :

- un électrolyte sous forme de membrane conductrice ionique réalisée dans ledit matériau permettant l'insertion de vapeur d'eau dans ladite membrane,
- une anode,
- une cathode,
- un générateur permettant d'appliquer une différence de potentiel entre ladite anode et ladite cathode,
- des moyens pour l'insertion sous pression de vapeur d'eau dans ledit électrolyte via ladite cathode.

La présente invention est également en relation avec un premier dispositif de purification d'hydrogène pour la mise en oeuvre du procédé selon l'invention caractérisé en ce qu'il comporte :

- une membrane de filtration protonique réalisée dans ledit matériau permettant l'insertion de vapeur d'eau dans ladite membrane,
- des moyens pour l'insertion sous pression de vapeur d'eau dans ladite membrane via l'alimentation, ladite pression de vapeur d'eau étant choisie de sorte que le potentiel de la sortie de perméat soit supérieur au potentiel du côté de l'alimentation.

La présente invention est également en relation avec un second dispositif de purification (ou de pompage) d'hydrogène pour la mise en oeuvre du procédé selon l'invention caractérisé en ce qu'il comporte :

- une membrane de filtration protonique réalisée dans ledit matériau permettant l'insertion de vapeur d'eau dans ladite membrane,
- une anode,
- une cathode,
- un générateur permettant de polariser positivement ladite anode et négativement ladite cathode,
- des moyens pour l'insertion sous pression de vapeur d'eau dans ladite membrane via ladite cathode.

La présente invention est également en relation avec une première pile à combustible hydrogène pour la mise en oeuvre du procédé selon l'invention caractérisé en ce qu'elle comporte :

- un électrolyte sous forme de membrane conductrice protonique réalisée dans ledit matériau permettant l'insertion de vapeur d'eau dans ladite membrane,
- une anode,
- une cathode,
- des moyens pour l'insertion sous pression de vapeur d'eau dans ledit électrolyte via ladite anode, ladite pression de vapeur d'eau étant choisie de sorte que le potentiel de ladite cathode soit supérieur au potentiel de ladite anode.

La présente invention est également en ralation avec une seconde pile à combustible hydrogène pour la mise en oeuvre du procédé selon l'invention caractérisé en ce qu'il comporte :

- un électrolyte sous forme de membrane conductrice ionique réalisée dans ledit matériau permettant l'insertion de vapeur d'eau dans ladite membrane,
- une anode,
- une cathode,
- des moyens pour l'insertion sous pression de vapeur d'eau dans ledit électrolyte via ladite cathode.

D'autres caractéristiques et avantages de l'invention ressortiront clairement de la description qui en est donnée ci-dessous, à titre indicatif et nullement limitatif, en référence aux figures annexées, parmi lesquelles :

- les figures 1 et 2 sont des représentations schématiques simplifiées d'un électrolyseur,
- la figure 3 est une représentation d'une structure de perovskite simple $ABO_3$,
- la figure 4 représente des résultats d'analyse thermogravimétrique réalisée sur différents échantillons de perovskite ;
- la figure 5 représente des résultats d'analyse thermogravimétrique en pression sur un échantillon présentant un taux de densification proche de 100 % ;
- les figures 6, 7 et 8 représentent une pluralité de diagrammes de Nyquist illustrant le rôle de la pression dans le procédé selon l'invention.
- la figure 9 représente une pluralité de courbes de conductivité en fonction de la température illustrant le rôle de la pression dans le procédé selon l'invention,
- les figures 10 et 11 représentent chacune de manière schématique et simplifiée un mode de réalisation d'un dispositif d'électrolyse mettant en oeuvre le procédé selon l'invention,
- les figures 12 et 13 représentent chacune de manière schématique et simplifiée un mode de réalisation d'un dispositif de purification d'hydrogène mettant en oeuvre le procédé selon l'invention,
- les figures 14 et 15 représentent chacune de manière schématique et simplifiée un mode de réalisation d'une pile à combustible hydrogène mettant en oeuvre le procédé selon l'invention.

Dans toutes les figures, les éléments communs portent les mêmes numéros de référence.
Les figures 1 à 3 ont été décrites précédemment en référence à l'état de la technique.

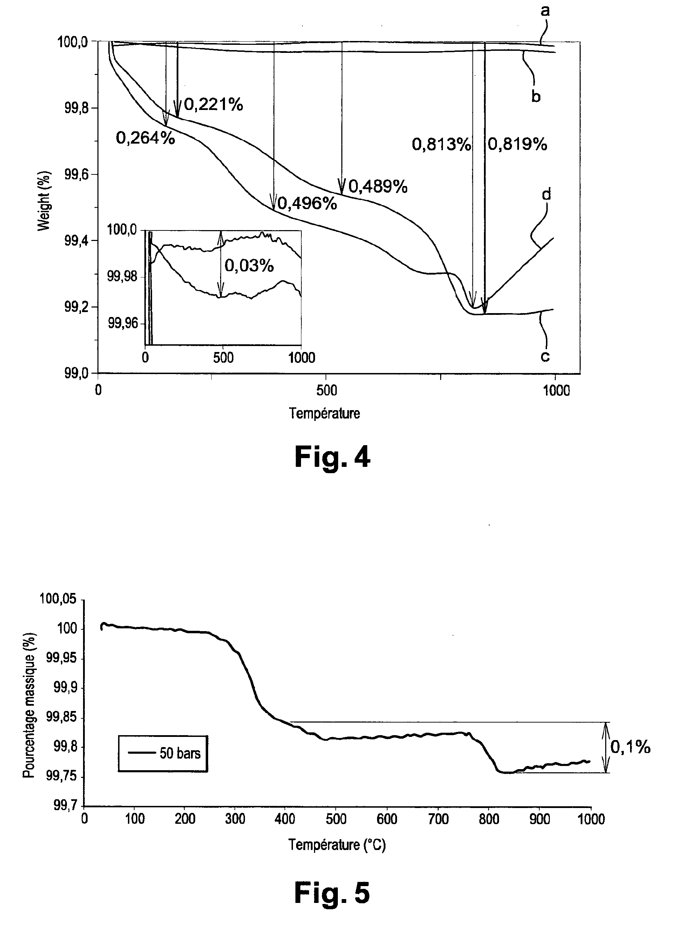

La figure 4 représente quatre analyses ATG-ATD (Analyse thermogravimétrique couplée à une analyse thermo-différentielle) a, b, c et d réalisées respectivement sur :

a. une perovskite du type $ABO_3$ hydratée avec une pression de vapeur d'eau de 15 bars à 200 °C,
b. une perovskite du type $AB_{0.9}Ln_{0.1}O_{2.95}$ non hydratée à 200°C,
c. une perovskite du type $AB_{0.9}Ln_{0.1}O_{2.95}$ hydratée avec une pression de vapeur d'eau de 15 bars sous atmosphère de $N_2$ à 200°C,
d. une perovskite du type $AB_{0.9}Ln_{0.1}O_{2.95}$ hydratée avec une pression de vapeur de 15 bars sous atmosphère d'$O_2$ à 200°C,

Une analyse ATG-ATD est une analyse qui permet de mesurer la variation de masse d'un échantillon en fonction de la température.
D'après les courbes a et b, on n'observe pas de perte de masse sur les perovskites qui sont :

- soit non dopées (cas a),
- soit non hydratées sous pression de vapeur d'eau (cas b).

D'après les courbes c et d, on observe quatre pertes de masses bien marquées en fonction de l'augmentation de la température. Les températures correspondant à ces quatre pertes de masse sont déterminées par les points d'inflexion des courbes c et d et valent respectivement environ 150, 350, 700 et 800 °C. Les deux premières pertes de masse correspondent à la perte de molécules d'eau adsorbées à la surface des perovskites. Les troisième et quatrième pertes de masse d'environ 0.33% correspondent à la perte d'entités ioniques insérées et mobiles dans les perovskites telles que des ions $H^+$ ou $OH^-$. Il est intéressant de constater qu'au-delà de 800°C on observe une reprise de masse sur la courbe d correspondant à l'échantillon sous $O_2$. Ce phénomène s'explique par le fait que les lacunes de la perovskite (déshydratée à 800 °C) sont à nouveau remplies par des ions oxyde $O^{2-}$ ; on passe donc à une conduction assurée par les ions $O^{2-}$. Il convient de noter que les points d'inflexion dépendent bien entendu du matériau choisi et que la température de transition d'une conduction $H^+$ ou $OH^-$ à une conduction $O^{2-}$ dépend de ce matériau.
On notera en outre que les perovskites analysées ici sont des perovskites présentant un taux de densification de 88%. Le taux de remplissage en eau pour les perovskites c et d est de 100%. Des analyses analogues effectuées sur des perovskites présentant un taux de densification de 98% indiquent un taux de remplissage en eau de 75%. On constate donc qu'une densification plus élevée (qui peut s'avérer intéressante pour la réalisation d'électrolyte) ralentit l'insertion d'eau dans la perovskite (l'augmentation de la densification ne constitue cependant pas un obstacle à l'insertion d'eau).

En résumé, la figure 4 montre que :

- la conduction dans les perovskites :

  • est due à l'insertion d'eau et à la mobilité des ions ($H^+$ et $OH^-$ puis $O^{2-}$ à plus haute température),

  • se réalise préférentiellement avec des perovskites dopées (ou éventuellement non stoechiométriques) de manière à former des lacunes dans la structure cristallographique.

- Une pression supérieure ou égale à 15 bars est nécessaire pour obtenir un taux de remplissage en eau de 100% dans une perovskite densifiée à 88% et un taux de remplissage en eau de 75% pour une perovskite densifiée à 98%.

La figure 5 représente une analyse ATD-ATG sur un échantillon présentant une densification proche de 100 %. Cette analyse montre qu'il faut 50 bars (pendant 36 heures) de pression pour atteindre 40% de remplissage des lacunes.

Le procédé selon l'invention vise à optimiser la conductivité de la membrane en utilisant avantageusement les conclusions précédentes et en forçant la vapeur d'eau dans la membrane sous une certaine pression de manière à obtenir la conductivité recherchée à une température donnée.

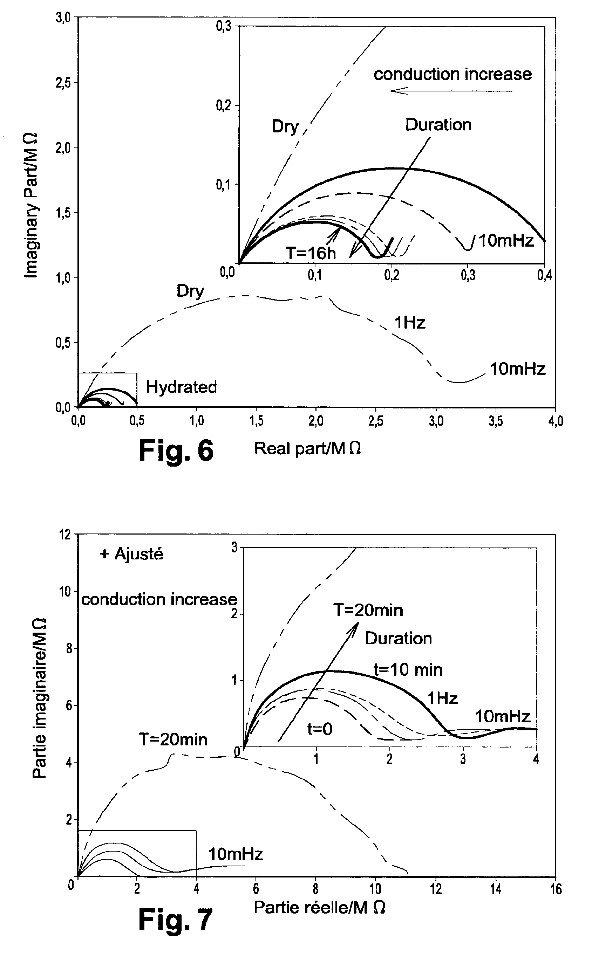

La figure 6 représente différents diagrammes de Nyquist obtenus avec une pastille de perovskite $SrZr_{0.9}Yb_{0.1}O_{2.95}$ densifiée à 88%, placée dans un four à 400°C sous balayage continu d'argon humidifié à une pression inférieure à 1 atm. Les différents diagrammes correspondent chacun à une condition spécifique de durée pendant laquelle a eu lieu le balayage en argon : on passe ainsi d'un diagramme réalisée avec une pastille non hydratée (« dry » en anglais), i.e. avec une durée nulle de balayage en argon humidifiée à un diagramme réalisée sur une pastille avec une durée t=16h de balayage continu en argon humidifié.

Les différents diagrammes de Nyquist sont obtenus par une technique électrochimique de spectroscopie d'impédance de plus en plus utilisée dans l'étude des matériaux. Le principe de la spectroscopie d'impédance repose sur l'application d'une faible tension sinusoïdale superposée à la tension nominale et sur l'analyse de l'amplitude et du déphasage du courant de réponse. Le rapport des amplitudes tension / courant définit le module de l'impédance |Z| et le déphasage entre la tension et le courant complète l'information pour donner accès aux parties réelle et imaginaire de l'impédance complexe Z. Lors des mesures, on balaye une gamme assez large de fréquences. Les résultats sont représentés sur un diagramme de Nyquist Im(Z) en fonction de Re(Z). Les résultats expérimentaux sont corrélés à une modélisation de manière à vérifier leur validité.

On trouve également sur la figure 6 un agrandissement des diagrammes de Nyquist pour la partie réelle Re(Z) variant de 0 à 0.4 M$\Omega$.

Chaque diagramme a sensiblement la forme d'un arc de cercle ; en première approximation (correspondant à une modélisation de la pastille selon un filtre RC parallèle), la résistance des pastilles est donnée par le diamètre du cercle correspondant. Dès lors, on observe une diminution de la résistance (et donc une augmentation de la conductivité) à mesure que le temps de balayage sous argon humidifié augmente.

La figure 7 représente différents diagrammes de Nyquist obtenus avec une pastille de perovskite $SrZr_{0.9}Yb_{0.1}O_{2.95}$ densifiée à 88%, donc identique à la pastille testée en figure 6, mais qui a été auparavant saturée d'eau dans un autoclave (pré-pressurisation sous 15 bars d'eau à 200°C). A nouveau, cette pastille est placée dans un four à 400°C sous balayage continu d'argon humidifié. Les différents diagrammes correspondent chacun à une condition spécifique de durée pendant laquelle a eu lieu le balayage en argon. On observe alors une diminution de la conductivité à mesure que le temps de balayage augmente. Ainsi, en dépit du balayage en argon humidifié, la conductivité diminue.

L'analyse des figures 6 et 7 tend à montrer que la perovskite se comporte comme une « éponge » : dans le cas de la figure 6, l'eau pénètre dans la pastille et la conductivité augmente avec le temps; dans le cas de la figure 7, l'eau quitte la pastille qui est déjà pré-pressurisée et la conductivité diminue avec le temps.

En résumé, les figures 6 et 7 montrent que:

- la conductivité augmente à mesure que l'insertion d'eau est réalisée (sous balayage d'argon à partir d'une pastille « sèche »),
- la réversibilité de l'insertion et de la désorption d'eau avec une pastille qui fonctionne comme une « éponge » entre un processus d'hydratation progressif (et d'augmentation de la conductivité) et un état de déshydratation progressif (et une diminution de la conductivité,
- pour avoir une bonne conductivité, il est nécessaire de forcer sous pression l'insertion d'eau dans la pastille.

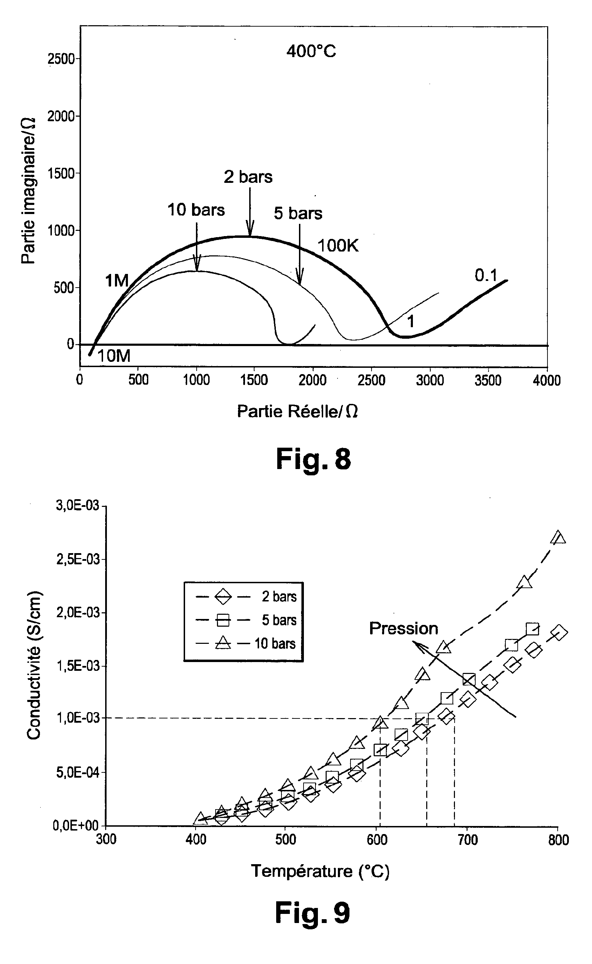

La figure 8 représente différents diagrammes de Nyquist obtenus avec une pastille de perovskite de $SrZr_{0.9}Yb_{0.1}O_{2.95}$ sous différentes pressions (correspondant à des pressions de vapeur d'eau de 2, 5 et 10 bars). Les mesures sont faites à 400°C. On observe que la conductivité augmente avec la pression.

Ce comportement est confirmé par la figure 9 qui représente trois courbes de conductivité en fonction de la température obtenues sur une pastille de perovskite de $SrZr_{0.9}Yb_{0.1}O_{2.95}$ soumises à trois pressions différentes de vapeur d'eau, respectivement 2, 5 et 10 bars. La figure 9 illustre clairement l'augmentation de la conductivité avec la pression. On obtient une conductivité de l'ordre de $10^{-3}$ S/cm pour une pression de 10 bars à une température de 600°C. Pour obtenir une même conductivité à 5 bars, il faut une température d'environ 650°C ; à 2 bars, la température monte à 675 °C. Une nouvelle augmentation de la pression permet d'obtenir des conductivités supérieures ou égales à $10^{-2}$ S/cm. Le même comportement a été observé avec d'autres perovskites comme Ba Zr $_{0.9}$Y$_{0.1}$O$_{2.95}$

En d'autres termes, pour obtenir une conductivité donnée, il est possible de travailler à plus basse température en augmentant la pression de vapeur d'eau dans la perovskite. Ce résultat présente un avantage considérable puisqu'il permet de s'affranchir de l'utilisation de matériaux fonctionnant à plus haute température.

L'augmentation de température entraîne une augmentation de la mobilité de l'espèce ionique assurant la conductivité mais a également pour effet de déshydrater la perovskite. La déshydratation de la perovskite est compensée par le maintien sous pression d'eau de la perovskite.

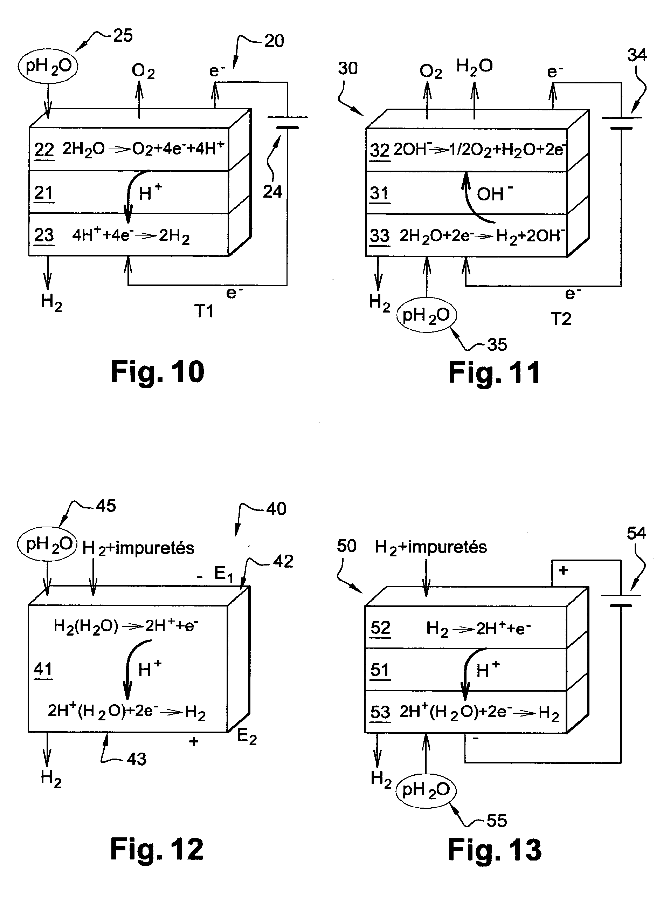

Les figures 10 et 11 représentent chacune de manière schématique et simplifiée un mode de réalisation d'un dispositif d'électrolyse pour la production d'hydrogène, respectivement 20 et 30, mettant en oeuvre le procédé selon l'invention.

Le dispositif d'électrolyse 20 de la figure 10 est sensiblement identique au dispositif 10 de la figure 2. Ainsi, ce dispositif 20 comporte :

- une membrane céramique 21 conductrice de proton réalisée dans un matériau permettant l'insertion de vapeur d'eau dans ladite membrane et assurant la fonction d'électrolyte séparant,
- une anode 22,
- une cathode 23,
- un générateur 24 imposant une différence de potentiel entre l'anode 22 et la cathode 23.

La membrane à conduction protonique est réalisée dans un matériau favorisant l'insertion d'eau tel qu'un matériau perovskite dopé de formule générale AB $_{1-x}$D$_x$O$_{3-x/2}$. Les matériaux utilisés pour l'anode et la cathode sont des cermets (mélange de métal avec le matériau perovskite utilisé pour l'électrolyte). La membrane est de préférence imperméable aux gaz $O_2$ et $H_2$.

Le dispositif 20 comporte en outre des moyens 25 permettant d'insérer sous pression de la vapeur d'eau dans la membrane 21 via l'anode 22, la pression de vapeur d'eau étant préférentiellement au moins supérieure à 15 bars, voire supérieure ou égale à 50 bars. Précisons que la pression totale imposée dans un compartiment devra être compensée dans l'autre compartiment de manière à avoir une différence de pression entre les deux compartiments de l'ordre de 10 bars pour éviter la rupture de la membrane. On peut ainsi sur la figure 10, augmenter la pression d'$H_2$

La température T1 de fonctionnement du dispositif 20 dépend du type de matériau utilisé pour la membrane 21 ; en tout état de cause, cette température est supérieure à 400°C et généralement inférieure à 650°C, voire inférieure à 600°C. Cette température de fonctionnement correspond à une conduction assurée par des protons $H^+$.

La vapeur d'eau $H_2O$ sous pression est oxydée à l'anode 22. La vapeur est dissociée pour former de l'oxygène $O_2$ et des ions $H^+$, cette réaction libérant des électrons e$^-$. Les ions $H^+$ traversent l'électrolyte 21 pour former de l'hydrogène $H_2$ à la surface de la cathode 23.

La mise en oeuvre du procédé selon l'invention permet d'augmenter notablement la conductivité des ions $H^+$.

Le dispositif d'électrolyse 30 de la figure 11 est de structure semblable à celle du dispositif 20 de la figure 8. Il comporte :

- une anode 32,
- une cathode 33,
- un électrolyte 31 sous forme de membrane conductrice ionique réalisée dans un matériau permettant l'insertion la vapeur d'eau dans ladite membrane,
- un générateur 34 assurant une différence de potentiel entre l'anode 32 et la cathode 33,
- des moyens 35 permettant d'insérer sous pression de la vapeur d'eau dans la membrane 31 via la cathode 33.

La température T2 de fonctionnement du dispositif 30 est supérieure à la température T1 de fonctionnement du dispositif 20 de la figure 10 ; T2 est généralement supérieure à 600°C et inférieure à 850°C et correspond à une conductivité assurée par les ions OH$^-$. A nouveau, l'injection de vapeur d'eau sous pression permet d'augmenter notablement la conductivité. L'injection se fait via les moyens 35 au niveau de la cathode 33. A la cathode 33, l'eau est réduite en captant des électrons pour former de l'hydrogène. Les ions OH$^-$ traversent l'électrolyte 31 et sont oxydés à l'anode 32 pour former de l'$O_2$, de l'$H_2O$ et des électrons. De la même manière que pour le dispositif 20 de la figure 10, il peut s'avérer nécessaire d'équilibrer les pressions.

Les figures 12 et 13 représentent chacune de manière schématique et simplifiée un mode de réalisation d'un dispositif de purification d'hydrogène, respectivement 40 et 50, mettant en oeuvre le procédé selon l'invention.

Le dispositif de purification 40 de la figure 12 comporte:

- une membrane de filtration protonique 41 réalisée dans un matériau permettant l'insertion de vapeur d'eau dans la membrane,
- des moyens 45 permettant d'insérer sous pression de la vapeur d'eau dans la membrane 41 via une alimentation 42.

La membrane de filtration protonique 41 est réalisée dans un matériau constituant un mélange de métal et de perovskite.

On injecte du coté de l'alimentation 42 un mélange d'hydrogène $H_2$ et d'impuretés (telles que des produits carbonés $CO_2$, CO, $CH_4$) sous pression, la fonction du dispositif 40 étant de séparer l'$H_2$ des impuretés de manière à fournir du coté du perméat de l'hydrogène $H_2$ pur. Seuls les protons $H^+$ diffusent par gradient de concentration dans la membrane protonique 41 vers la sortie de perméat 43. Le métal de la membrane permet de faire percoler des électrons vers la sortie de perméat 43 ; on observe alors une réduction des protons par les électrons au niveau de la sortie de perméat 43 de façon à récupérer de l'hydrogène pur.

Les moyens 45 permettent d'augmenter la conductivité protonique. En revanche, la pression d'eau du coté anodique va avoir tendance à augmenter le potentiel $E_1$ du coté de l'alimentation 42. Pour que le dispositif 40 fonctionne, il convient que le potentiel $E_2$ coté perméat soit toujours supérieur au potentiel $E_1$. Dès lors, il convient de choisir la pression d'eau de sorte que le potentiel $E_2$ soit toujours supérieur à $E_1$.

En figure 13, le dispositif de purification 50 comporte :

- une anode 52,
- une membrane de filtration protonique 51 réalisée dans un matériau permettant l'insertion de vapeur d'eau dans la membrane,
- une cathode 53,
- des moyens 55 permettant d'insérer sous pression de la vapeur d'eau dans la membrane 51 via la cathode 53,
- un générateur 54 qui polarise positivement l'anode 52 et négativement la cathode 53.

On injecte du coté de l'anode 52 un mélange d'hydrogène $H_2$ et d'impuretés non oxydées (telles que du méthane par exemple) sous pression, la fonction du dispositif étant de séparer l'$H_2$ des impuretés de manière à fournir du coté de la cathode 53 de l'hydrogène $H_2$ pur. A nouveau, la pression d'eau permet d'augmenter la conductivité protonique. Il convient de noter que ce dispositif fonctionnera d'autant mieux que la pression d'$H_2$ du coté anodique est élevée. Par ailleurs, ce dispositif 50 peut également être utilisé en tant que pompe à hydrogène ; en d'autres termes, il peut servir à extraire de l'hydrogène d'un système (dans ce cas, l'hydrogène n'est pas nécessairement mélangé à des impuretés du coté anodique).

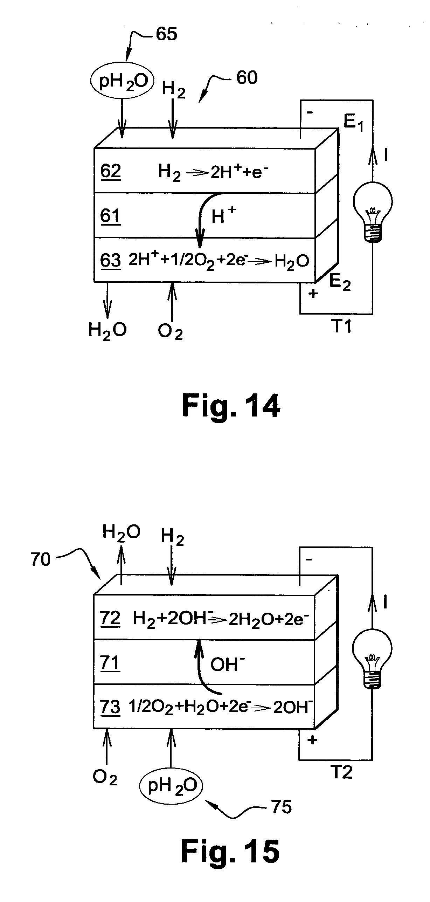

Les figures 14 et 15 représentent chacune de manière schématique et simplifiée un mode de réalisation d'une pile à combustible hydrogène, respectivement 60 et 70, mettant en oeuvre le procédé selon l'invention.

En figure 14, la pile à combustible hydrogène 60 comporte :

- une anode 62,
- une cathode 63,
- un électrolyte 61 à conduction protonique réalisée dans un matériau permettant l'insertion la vapeur d'eau dans la membrane,
- des moyens 65 permettant d'insérer sous pression de la vapeur d'eau dans l'électrolyte 61 via l'anode 62.

Les électrodes 62 et 63 mettent en jeu des catalyseurs pour activer d'un coté, la réaction d'oxydation de l'hydrogène, et de l'autre coté, la réaction de réduction de l'oxygène. L'hydrogène introduit à l'anode 62 est dissocié en protons et en électrons. L'amélioration de l'insertion de protons dans la membrane 61 (et donc de la conductivité) est à nouveau assurée par les moyens 65 permettant d'insérer sous pression de la vapeur d'eau dans l'électrolyte 61 via l'anode 62. A la cathode 63, l'oxygène, les électrons et les protons se recombinent pour former de l'eau.

La pression d'eau du coté anodique va avoir tendance à augmenter le potentiel $E_1$ du coté anodique. Pour que la pile 60 fonctionne, il convient que le potentiel $E_2$ coté cathodique soit toujours supérieur au potentiel $E_1$. Dès lors, il convient de choisir la pression d'eau de sorte que le potentiel $E_2$ soit toujours supérieur à $E_1$. Les deux pressions d'eau peuvent être équivalentes.

La température T1 de fonctionnement de la pile 60 dépend du type de matériau utilisé pour la membrane 61 ; en tout état de cause, cette température est toujours supérieure à 400°C et généralement inférieure à 650°C, voire inférieure à 600 °C. Cette température de fonctionnement correspond à une conduction assurée par des protons $H^+$.

En figure 15, la pile à combustible hydrogène 70 comporte :

- une anode 72,
- une cathode 73,
- un électrolyte 71 sous forme de membrane conductrice ionique réalisée dans un matériau permettant l'insertion de vapeur d'eau dans ladite membrane,
- des moyens 75 permettant d'insérer sous pression de la vapeur d'eau dans l'électrolyte 71 via la cathode 73.

La température de fonctionnement T2 de la pile 70 est supérieure à la température T1 de la pile 60 de la figure 12 de sorte que la conductivité est assurée par la mobilité des ions $OH^-$: la conductivité est augmentée par l'injection sous pression de vapeur d'eau par les moyens 75. Les électrodes 72 et 73 mettent en jeu des catalyseurs pour activer du coté cathodique, la réaction : $1/2O_2$ + $H_2O$ + 2e$^-$ → 2$OH^-$ et du coté anodique, la réaction : $H_2$ + 2$OH^-$ → 2$H_2O$ + 2e$^-$.

Contrairement à la pile 60, l'augmentation de la pression de vapeur d'eau n'est pas limitée par la différence de potentiel entre les deux électrodes et il est donc possible d'augmenter la pression sans limitation pour augmenter la conductivité.

Dans chacun des dispositifs décrits précédemment, il peut s'avérer nécessaire de contrebalancer la pression de vapeur d'eau pour éviter une rupture de la céramique. Cette contre-pression sera fonction de l'épaisseur de la membrane.

Bien entendu, l'invention n'est pas limitée au mode de réalisation qui vient d'être décrit.

Notamment, nous avons à plusieurs reprises parlé de pression de vapeur d'eau mais il convient de noter que lorsque la vapeur d'eau fait partie d'un mélange gazeux, il convient de parler de pression partielle de vapeur d'eau : c'est bien l'augmentation de pression partielle de vapeur d'eau qui permet d'augmenter la conductivité à une température donnée.

Par ailleurs, les applications décrites plus haut mettent en oeuvre des températures supérieures ou égales à 400 °C ; on notera cependant que la température de fonctionnement dépend du matériau utilisé. Ainsi, dans le cas des alumino silicates par exemple, la température de fonctionnement peut être inférieure à 400 °C (de l'ordre de 300 °C par exemple).

Enfin, on pourra remplacer tout moyen par un moyen équivalent.

**Revendications**

1. Procédé pour obtenir une conductivité recherchée correspondant à une température donnée dans une membrane conductrice, ladite conductivité étant assurée par le déplacement des protons $H^+$ et/ou des ions $OH^-$ de la membrane conductrice réalisée dans un matériau permettant l'insertion de vapeur d'eau dans ladite membrane, ledit procédé comportant une étape d'insertion sous pression d'un courant gazeux contenant de la vapeur d'eau dans ladite membrane de sorte qu'on force ladite vapeur d'eau à rentrer dans ladite membrane sous une certaine pression partielle de manière à obtenir la conductivité recherchée, ladite pression partielle de vapeur d'eau est supérieure ou égale à 10 bars et inférieure ou égale à 100 bars, ledit matériau permettant l'insertion de vapeur d'eau dans ladite membrane étant choisi parmi les matériaux suivants :

   - oxyde lacunaire en atomes d'oxygène tel qu'une perovskite ;
   - matériau possédant une structure cristallographique choisie parmi les structures suivantes : fluorine, pyrochlore ou apatite.

2. Procédé selon la revendication précédente **caractérisé en ce que** ladite pression partielle de vapeur d'eau est supérieure ou égale à 15 bars.

3. Procédé selon l'une des revendications précédentes **caractérisé en ce que** ladite température est supérieure à 400°C.

4. Procédé selon l'une des revendications précédentes **caractérisé en ce que** la conductivité ionique est supérieure ou égale à $10^{-3}$ S/cm.

5. Procédé selon l'une des revendications précédentes **caractérisé en ce que** ledit matériau est imperméable aux gaz $O_2$ et $H_2$.

6. Procédé selon l'une des revendications précédentes **caractérisé en ce que** ledit matériau est un matériau ayant un taux de densification supérieur à 88%.

7. Procédé selon la revendication précédente **caractérisé en ce que** ledit matériau a un taux de densification supérieur ou égal à 98%.

8. Procédé selon l'une des revendications précédentes **caractérisé en ce que** ledit oxyde lacunaire en atomes d'oxygène présente des écarts stoechiométriques et /ou est dopé de façon à permettre la création de lacunes d'oxygène.

9. Procédé selon la revendication précédente **caractérisé en ce que** ledit oxyde lacunaire en atomes d'oxygène est une perovskite

10. Procédé selon la revendication précédente **caractérisé en ce que** ladite perovskite répond à la formule suivante : $AB_{1-x}D_xO_{3-x/2}$ dans laquelle D désigne un élément dopant.

11. Procédé selon la revendication précédente **caractérisé en ce que** l'élément dopant D est choisi parmi, les lanthanides, les éléments alcalins ou alcalinoterreux.

12. Procédé selon la revendication précédente **caractérisé en ce que** l'élément dopant D est de préférence l'ytterbium Yb à son degré d'oxydation +III.

13. Procédé selon la revendication 9 **caractérisé en ce que** ladite perovskite est une perovskite non stoechiométrique répondant à la formule suivante : $A_xB_yO_3$, x et y étant deux nombres réels différents de 1.

**Patentansprüche**

1. Verfahren zum Erhalt einer gewünschten Leitfähigkeit, die einer bestimmten Temperatur in einer leitenden Membran entspricht, wobei die genannte Leitfähigkeit durch die Verschiebung der Protonen $H^+$ und / oder der Ionen $OH^-$ der leitenden Membran gewährleistet ist, das das Einführen von Wasserdampf in die genannte Membran erlaubt, wobei das genannte Verfahren eine Einführstufe unter Druck eines gasförmigen Stroms umfasst, der Wasserdampf in der genannten Membran derart enthält, dass der genannte Wasserdampf gezwungen wird, unter einem gewissen Teildruck derart in die genannte Membran einzutreten, dass die gewünschte Leitfähigkeit erhalten wird, der genannte Teildruck des Wasserdampfes höher als oder gleich 10 bar und niedriger als oder gleich 100 bar ist, wobei das genannte Material, das das Einführen von Wasserdampf in die genannte Membran erlaubt, aus den folgenden Materialien ausgewählt ist:

- an Sauerstoffatomen lückenhafter Sauerstoff, wie z. B. Perovskit;
- eine kristallographische Struktur enthaltendes Material, das aus den folgenden Strukturen ausgewählt ist: Fluorin, Pyrochlor oder Apatit.

2. Verfahren gemäß dem voranstehenden Anspruch, **dadurch gekennzeichnet, dass** der genannte Teildruck des Wasserdampfes höher als oder gleich 15 bar ist.

3. Verfahren gemäß einem der voranstehenden Ansprüche, **dadurch gekennzeichnet, dass** die genannte Temperatur höher als 400°C ist.

4. Verfahren gemäß einem der voranstehenden Ansprüche, **dadurch gekennzeichnet, dass** die ionische Leitfähigkeit höher als oder gleich $10^{-3}$ S/cm ist.

5. Verfahren gemäß einem der voranstehenden Ansprüche, **dadurch gekennzeichnet, dass** das genannte Material für die Gase $O_2$ und $H_2$ undurchlässig ist.

6. Verfahren gemäß einem der voranstehenden Ansprüche, **dadurch gekennzeichnet, dass** das genannte Material einen 88 % übersteigenden Verdichtungsgrad hat.

7. Verfahren gemäß dem voranstehenden Anspruch, **dadurch gekennzeichnet, dass** das genannte Material einen Verdichtungsgrad hat, der höher als oder gleich 98 % ist.

8. Verfahren gemäß einem der voranstehenden Ansprüche, **dadurch gekennzeichnet, dass** der genannte, an Sauerstoffatomen lückenhafte Sauerstoff stöchiometrische Abweichungen aufweist und / oder derart gedopt ist, dass die Kreation von Sauerstofflücken ermöglicht wird.

9. Verfahren gemäß dem voranstehenden Anspruch, **dadurch gekennzeichnet, dass** der genannte, an Sauerstoffatomen lückenhafte Sauerstoff ein Perovskit ist.

10. Verfahren gemäß dem voranstehenden Anspruch, **dadurch gekennzeichnet, dass** das genannte Perovskit der folgenden Formel entspricht: $AB_{1-x}D_xO_{3-x/2}$, bei der D ein dotierendes Element bezeichnet.

11. Verfahren gemäß dem voranstehenden Anspruch, **dadurch gekennzeichnet, dass** das dotierende Element D aus Lanthaniden, alkalischen oder erdalkalischen Elementen ausgewählt ist.

12. Verfahren gemäß dem voranstehenden Anspruch, **dadurch gekennzeichnet, dass** das dotierende Element D bevorzugt Ytterbium Yb mit seinem Oxidationsgrad +III ist.

13. Verfahren gemäß Anspruch 9, **dadurch gekennzeichnet, dass** das genannte Perovskit ein nicht stöchiometrisches Perovskit ist, das der folgenden Formel entsprich: $A_xB_yO_3$, wobei x und y zwei von 1 unterschiedliche reelle Zahlen sind.

## Claims

1. Method for obtaining a desired conductivity corresponding to a given temperature in a conductive membrane, said conductivity being assured by the displacement of $H^+$ protons and/or $OH^-$ ions from the conductive membrane made of a material enabling the insertion of steam into said membrane, wherein said method comprises a step of inserting under pressure a gaseous flow containing the steam into said membrane in order to force said steam into said membrane under a certain partial pressure so as to obtain the desired conductivity, said partial steam pressure being higher than or equal to 10 bars, and less than or equal to 100 bars, said material enabling the insertion of steam into said membrane being selected from the following materials:

- an oxide deficient in oxygen atoms, such as a perovskite;
- a material having a crystallographic structure selected from the following structures: fluorine, pyrochlore or apatite.

2. Method according to the preceding claim **characterized in that** said partial steam pressure is higher than or equal to 15 bars.

3. Method according to one of the preceding claims **characterized in that** said temperature is higher than 400°C.

4. Method according to one of the preceding claims **characterized in that** the ionic conductivity is higher than or equal to $10^{-3}$ S/cm.

5. Method according to one of the preceding claims **characterized in that** said material is impermeable to the gases $O_2$ and $H_2$.

6. Method according to one of the preceding claims **characterized in that** said material is a material having a densification level higher than 88%.

7. Method according to the preceding claim **characterized in that** said material has a densification level higher than or equal to 98%.

8. Method according to one of the preceding claims **characterized in that** said oxygen atom deficient oxide has stoichiometric discrepancies and/or is doped so as to enable the creation of oxygen vacancies.

9. Method according to the preceding claim **characterized in that** said oxygen atom deficient oxide is a perovskite.

10. Method according to the preceding claim **characterized in that** said perovskite meets the following formula: $AB_{1-x}D_xO_{3-x/2}$ in which D designates a doping element.

11. Method according to the preceding claim **characterized in that** the doping element D is selected from lanthanides, alkaline or alkaline-earth elements.

12. Method according to the preceding claim **characterized in that** the doping element D is preferably ytterbium Yb at its +III degree of oxidation.

13. Method according to claim 9 **characterized in that** said perovskite is a non-stoichiometric perovskite meeting the following formula: $A_xB_yO_3$, wherein x and y are two real numbers different to 1.

**Fig. 1**

**Fig. 2**

**Fig. 3**

**Fig. 4**

**Fig. 5**

**Fig. 6** Real part/M Ω

**Fig. 7** Partie réelle/M Ω

**Fig. 8**

**Fig. 9**

**Fig. 10**

**Fig. 11**

**Fig. 12**

**Fig. 13**

65

$pH_2O$  $H_2$  60

−  $E_1$

| 62 | $H_2 \rightarrow 2H^+ + e^-$ |
| 61 | $H^+$ |
| 63 | $2H^+ + 1/2O_2 + 2e^- \rightarrow H_2O$ |

$E_2$

+

I

$H_2O$  $O_2$  T1

**Fig. 14**

$H_2O$  $H_2$

70

−

| 72 | $H_2 + 2OH^- \rightarrow 2H_2O + 2e^-$ |
| 71 | $OH^-$ |
| 73 | $1/2O_2 + H_2O + 2e^- \rightarrow 2OH^-$ |

I

+

$O_2$  $pH_2O$  T2

75

**Fig. 15**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0962423 A

**Littérature non-brevet citée dans la description**

• **T. KOBAYASHI et al.** Reduction of nitrogen oxide by a steam electrolysis cell using a proton conducting electrolyte. *Solid State Ionics,* 1996, vol. 86-88, 603-607